(19) Europäisches Patentamt / European Patent Office / Office européen des brevets

(11) **EP 4 241 400 B1**

(12) **FASCICULE DE BREVET EUROPEEN**

(45) Date de publication et mention de la délivrance du brevet:
**16.10.2024 Bulletin 2024/42**

(21) Numéro de dépôt: **21782884.7**

(22) Date de dépôt: **30.08.2021**

(51) Classification Internationale des Brevets (IPC):
**H04B 11/00** *(2006.01)*    **G01V 1/20** *(2006.01)*
**G01V 1/18** *(2006.01)*

(52) Classification Coopérative des Brevets (CPC):
**H04B 11/00; G01V 1/186; G01V 1/187; G01V 1/201**

(86) Numéro de dépôt international:
**PCT/EP2021/073829**

(87) Numéro de publication internationale:
**WO 2022/096173 (12.05.2022 Gazette 2022/19)**

(54) **DISPOSITIF ET PROCÉDÉ DE RECEPTION D'ONDES ACOUSTIQUES**

EMPFANGSVORRICHTUNG UND VERFAHREN FÜR SCHALLWELLEN

RECEIVING DEVICE AND METHOD FOR ACOUSTIC WAVES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.11.2020 FR 2011345**

(43) Date de publication de la demande:
**13.09.2023 Bulletin 2023/37**

(73) Titulaire: **THALES**
**92190 Meudon (FR)**

(72) Inventeurs:
• **BRUNET, Jean-Philippe**
**29238 BREST (FR)**
• **DERRIENNIC, Hervé**
**29238 BREST (FR)**
• **TORLAY, Jean-Eric**
**29238 BREST (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**US-A- 3 868 624**

**Description**

L'invention se situe dans le domaine de la réception d'ondes acoustiques.

L'invention concerne, notamment, le domaine des antennes électroacoustiques de réception d'ondes acoustiques destinées à mesurer des signaux acoustiques se transmettant dans l'eau afin, par exemple, de faire de la recherche pétrolière, de la détection de mines ou de la lutte anti-sous-marine en détectant et en localisant des cibles sous-marines à partir de mesures délivrées par de telles antennes. Ces antennes, aussi appelées flûtes acoustiques, ont généralement la forme extérieure d'un tuyau pouvant atteindre plusieurs kilomètres de long. Les flûtes acoustiques comportent, de façon classique, répartis à l'intérieur et le long d'une gaine allongée susceptible de s'étendre linéairement, des transducteurs électroacoustiques, par exemple piézoélectriques, chargés d'enregistrer les ondes acoustiques provoquées par des sources de bruit sous-marins.

De telles flûtes sont destinées à être remorquées par un navire tracteur, directement ou via un câble tracteur.

Les signaux de sortie des transducteurs électroacoustiques sont ramenés à bord du navire tracteur.

Un sonar passif comprenant une telle antenne de réception comprend en outre une unité d'alimentation permettant de produire de l'énergie destinée à alimenter les transducteurs électroacoustiques et une unité de traitement destinée à traiter les mesures issues des différents transducteurs électroacoustiques pour détecter puis éventuellement identifier et localiser des objets. L'unité d'alimentation et l'unité de traitement sont déportées à bord du navire tracteur.

Toutefois, cette solution présente l'inconvénient de nécessiter des traitements coûteux en énergie pour la formation des voies acoustiques nécessaire pour la localisation de cibles sous-marines. Par ailleurs, cette solution nécessite beaucoup de matériel (transducteurs piézoélectriques, fils électriques d'alimentation, multiplexeurs de transmissions des mesures) ce qui conduit à des assemblages complexes et longs lors de la fabrication et de la maintenance.

Du brevet américain US 3, 868, 624, on connaît un dispositif pour cartographier des champs acoustiques. Cette solution comprend un microphone électrostatique distribué le long d'une ligne allongée sensible à la pression acoustique et des moyens de commande configurés pour appliquer des impulsions électromagnétiques sous forme d'impulsions de type Dirac au microphone électrostatique distribué de sorte que le microphone module ces impulsions électromagnétiques en amplitude en fonction de la pression acoustique à laquelle il est soumis. Cette solution comprend des moyens de réception des impulsions électromagnétiques modulées en amplitude.

Un inconvénient de cette solution est de présenter une sensibilité limitée. Elle convient donc pour cartographier un champ acoustique puissant, par exemple, au voisinage d'une antenne acoustique mais ne convient pas aux applications de lutte anti sous-marine dans lesquelles les signaux acoustiques recherchés sont généralement de faible puissance. En effet, la zone du microphone rendue sensible à la pression et donc la longueur utile du microphone électrostatique distribué sous l'effet de chaque impulsion présente une longueur très faible par rapport à la longueur de la ligne allongée. A titre d'exemple, une impulsion de 2 ns excite une zone de la ligne présentant une longueur de 40 cm environ. Cette faible longueur utile se traduit par une faible sensibilité du microphone électrostatique distribué. Dans cet exemple, si la ligne mesure 400 m, seul un millième de sa longueur est sensible à un instant donné, et seulement 1/10000 si elle mesure 4 km. Marginalement, elle rend le microphone sensible au bruit de l'écoulement qui est localisé et de ce fait vient perturber les mesures acoustiques délivrées par le microphone ce qui limite la vitesse maximale d'utilisation de l'antenne acoustique. Par ailleurs, cette solution complique la formation de voies directives ce qui la rend difficilement utilisable pour la localisation de cibles sous-marines.

Un but de l'invention est de limiter tout ou partie des inconvénients précités.

A cet effet, l'invention a pour objet un dispositif de réception d'ondes acoustiques comprenant :

- une antenne acoustique apte à présenter une fonction de microphone électrostatique distribué le long d'une ligne de l'antenne acoustique comprenant un conducteur et un matériau diélectrique, la ligne étant une ligne de transmission ou étant configurée pour présenter une fonction de ligne de transmission lorsque le matériau diélectrique est en contact physique direct avec un autre conducteur,

- un excitateur configuré pour appliquer, lors d'une étape de réception, une tension d'entrée au niveau d'une première extrémité longitudinale de la ligne de façon à générer une onde électromagnétique d'entrée se déplaçant vers une deuxième extrémité longitudinale de la ligne et de sorte à générer une onde électromagnétique de sortie se déplaçant en sens inverse de l'onde électromagnétique d'entrée, la tension d'entrée comprenant simultanément un ensemble de tensions sinusoïdales comprenant une tension sinusoïdale fondamentale et un ensemble d'harmoniques de la tension sinusoïdale fondamentale, la fréquence de la tension sinusoïdale fondamentale étant définie de façon que des ondes stationnaires s'établissent dans la ligne de sorte que l'onde électromagnétique de sortie comprend des voies directionnelles de l'antenne acoustique.

Avantageusement, le dispositif de réception d'ondes acoustique comprend un récepteur permettant de séparer les voies directionnelles de l'antenne acoustique et un ensemble de démodulateurs permettant de démoduler en amplitude les voies directionnelles de l'antenne en amplitude.

Dans un mode particulier de réalisation, la ligne est une ligne de transmission.

Dans ce mode de réalisation, l'antenne acoustique est, par exemple, la ligne, la ligne étant apte à présenter une fonction de microphone électrostatique sur toute sa longueur.

Dans un autre mode de réalisation, l'antenne acoustique comprend la ligne et des microphones électrostatiques élémentaires espacés le long de la ligne et reliés électriquement à la ligne de sorte que l'antenne soit apte à présenter une fonction de microphone électrostatique en des portions longitudinales espacées les unes des autres le long de la ligne.

Avantageusement, le dispositif de réception d'ondes acoustiques comprend un duplexeur configuré pour séparer l'onde électromagnétique de sortie de l'onde électromagnétique d'entrée.

L'invention se rapporte également à un procédé de détection d'ondes acoustiques à partir d'un dispositif de réception d'ondes acoustiques selon l'invention, le procédé de détection comprenant une étape de réception lors de laquelle l'excitateur applique, au niveau de la première extrémité longitudinale de la ligne de transmission, la tension d'entrée.

Avantageusement, le procédé comprend en outre, les étapes suivantes : séparer l'onde électromagnétique de sortie de l'onde électromagnétique d'entrée, séparer les voies directionnelles de l'antenne acoustique et démoduler les voies directionnelles en amplitude.

D'autres caractéristiques, détails et avantages de l'invention ressortiront à la lecture de la description faite en référence au dessin annexé donné à titre d'exemple et qui représente :

- la figure 1 représente schématiquement une flûte acoustique tractée par un bâtiment tracteur au moyen d'un câble tracteur,

- la figure 2 représente schématiquement les éléments d'un dispositif acoustique comprenant une antenne selon un premier mode de réalisation de l'invention,

- la figure 3 représente un schéma électrique d'une antenne acoustique selon un deuxième mode de réalisation de l'invention.

D'une figure à l'autre, les mêmes éléments sont repérés par les mêmes références.

Dans la présente demande de brevet, par conducteur on entend conducteur électrique et par isolant, on entend isolant électrique.

L'invention se rapporte à un dispositif de réception d'ondes acoustiques comprenant une antenne acoustique de réception destinée à recevoir des ondes acoustiques et à mesurer des pressions acoustiques.

L'invention se rapporte, notamment, à une antenne acoustique destinée à recevoir des ondes acoustiques lorsqu'elle est immergée.

L'invention se rapporte également à une antenne acoustique terrestre permettant l'enregistrement de signaux acoustiques transmis par le sol.

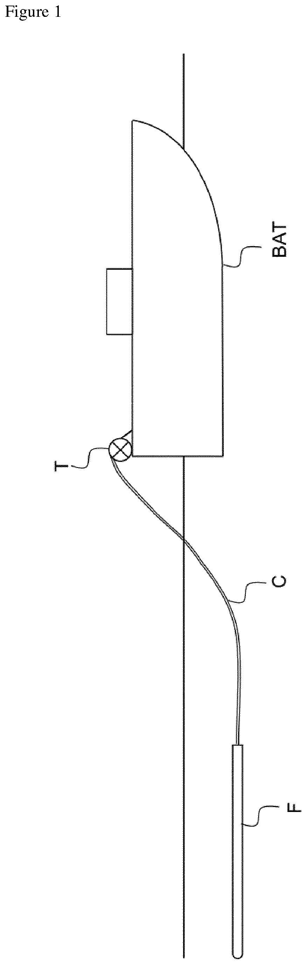

La figure 1 représente une flûte acoustique F, qui comprend une antenne acoustique, tractée par un bâtiment tracteur BAT au moyen d'un câble tracteur C pouvant être déployé ou enroulé au moyen d'un treuil T. En variante, la flûte acoustique F peut être tractée directement par le bâtiment tracteur BAT.

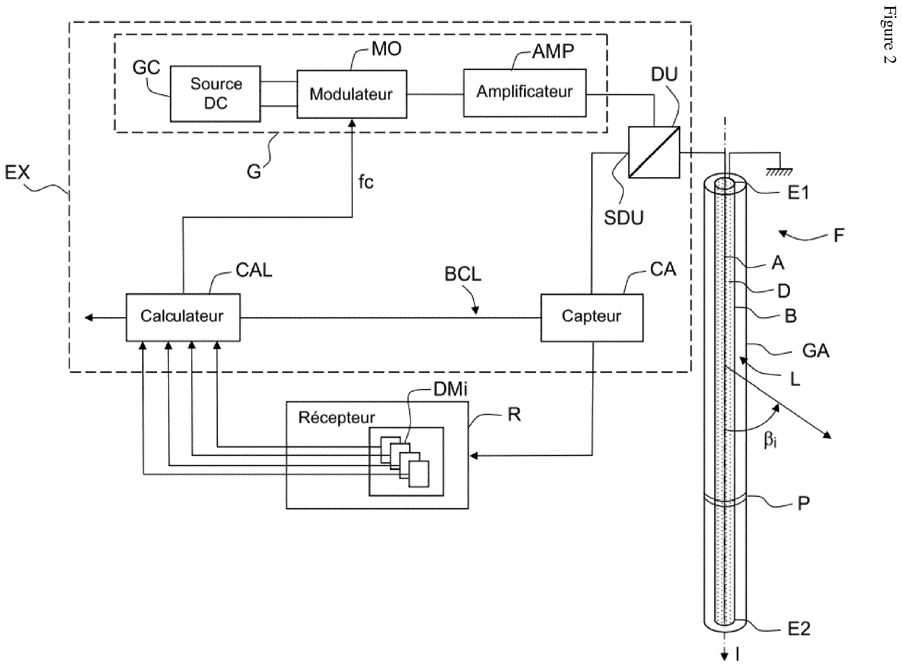

La figure 2 représente les éléments d'un dispositif de réception d'ondes acoustiques comprenant une flûte F comprenant une antenne acoustique selon un premier mode de réalisation de l'invention.

L'antenne acoustique selon l'invention comprend une ligne L allongée susceptible de s'étendre linéairement.

Avantageusement, la ligne L est souple de façon à pouvoir être enroulée autour d'un treuil T. En variante, la ligne L est linéaire.

Selon l'invention, l'antenne acoustique est configurée pour être apte à présenter une fonction de microphone électrostatique distribué le long de la ligne L.

Un microphone électrostatique comprend classiquement un condensateur comprenant deux armatures conductrices séparées par une distance représentative de la pression acoustique appliquée sur le condensateur. Une variation de cette pression acoustique, entraîne une variation de la tension V appliquée entre les deux armatures du condensateur.

Par microphone électrostatique distribué le long de la ligne, on entend un microphone électrostatique dont la capacité linéique est localement sensible à la pression au niveau de plusieurs portions longitudinales de la ligne L ou en chaque portion longitudinale de la ligne L, c'est-à-dire sur toute la longueur de la ligne L.

Ainsi, une variation locale de la pression acoustique au niveau d'une portion longitudinale P de la ligne L entraîne une variation de la capacité linéique de ce condensateur qui, au premier ordre, est proportionnelle à la pression acoustique appliquée sur le condensateur $C(p) = Cr(1 + kp)$. La charge linéique Q en Coulombs de ce câble est $Q = C \cdot V$ et ne peut s'écouler d'une armature à l'autre du fait de la présence du diélectrique. La variation de la capacité linéique dC sous l'action d'une variation de la pression acoustique dP entraîne alors une variation proportionnelle dV de la tension V ce qui est le principe de base du microphone électrostatique. Cr est la capacité linéique du condensateur à une pression de référence.

Dans le premier mode de réalisation de la figure 2, l'antenne acoustique est la ligne L et la ligne L est une ligne de transmission comprenant deux conducteurs A et B séparés par un premier matériau diélectrique D et entre lesquels est appliquée une tension d'entrée. Les conducteurs A et B sont les armatures d'un condensateur formant un microphone électrostatique.

Autrement dit, la ligne de transmission L est configurée de sorte à moduler, sous l'effet d'une pression acoustique à laquelle elle est soumise localement en chaque portion longitudinale de la ligne de transmission L, la tension appliquée entre les deux conducteurs A et B de la ligne de transmission L au niveau de la portion longitudinale. La ligne de transmission L présente une fonction de microphone électrostatique sur toute la longueur de la ligne de transmission L. Ce mode de réalisation utilise l'effet microphonique parasite induit sur la ligne de transmission par l'onde acoustique, et que l'on cherche habituellement à minimiser, pour caractériser des ondes acoustiques.

Dans l'exemple non limitatif de la figure 2, la ligne de transmission L est un câble coaxial comprenant une âme A étant le premier conducteur. L'âme A est entourée d'un premier matériau diélectrique D lui-même entouré d'un blindage B formant le deuxième conducteur.

Le dispositif de la figure 2 comprend une flûte acoustique F comprenant la ligne de transmission L et une gaine de protection entourant la ligne de transmission L.

La flûte F se présente, par exemple, sous la forme d'un élément allongé selon la ligne L et susceptible de s'étendre linéairement comme visible en figures 1 et 2.

Avantageusement, la flûte F est souple de façon à pouvoir être enroulée autour d'un treuil T. En variante, la flûte F est linéaire.

La ligne de transmission L s'étend longitudinalement depuis une première extrémité longitudinale E1 jusqu'à une deuxième extrémité longitudinale E2.

D'autres réalisations de ligne de transmission L sont bien entendu envisageables. La ligne de transmission peut, par exemple, être réalisée sous forme d'une paire torsadée incluse dans le premier matériau diélectrique, d'une ligne bifilaire incluse dans le premier matériau diélectrique ou d'un câble plat comportant deux rubans conducteurs séparés par le premier matériau diélectrique.

En variante, la ligne n'est pas une ligne de transmission. La ligne comprend, par exemple, un premier conducteur accolé au premier matériau diélectrique et la ligne est configurée de sorte à présenter une fonction de ligne de transmission lorsque le premier matériau diélectrique est en contact physique direct avec un deuxième conducteur, par exemple, l'eau de mer. La ligne est, par exemple constituée d'une âme conductrice entourée du premier matériau diélectrique. Un milieu conducteur dans laquelle elle est plongée a alors un rôle de blindage et donc de deuxième armature du condensateur. La tension d'entrée est alors appliquée entre le premier conducteur et le deuxième conducteur.

Le premier matériau diélectrique est, par exemple, compressible. Autrement dit, il est choisi de façon que son épaisseur varie localement sous l'effet d'une variation de la pression acoustique appliquée localement sur la ligne de transmission ce qui a pour effet de faire varier localement la distance entre les deux armatures du condensateur et donc de faire varier localement la capacité linéique du condensateur. L'épaisseur du premier matériau diélectrique (compression ou dépression) module localement la tension appliquée entre les armatures du condensateur.

En variante, le premier matériau diélectrique est choisi de façon que sa permittivité varie localement lorsque la pression acoustique appliquée localement sur la ligne de transmission varie ce qui a pour effet de faire varier localement la capacité linéique du condensateur et donc de faire varier la modulation locale de la tension appliquée entre les armatures du condensateur.

Ces exemples ne sont pas limitatifs. On peut envisager différents types de lignes présentant une caractéristique, par exemple, une caractéristique géométrique, sensible à la pression acoustique de sorte à présenter une fonction de microphone électrostatique, c'est-à-dire de sorte à moduler localement une tension à laquelle est soumise la ligne de transmission en fonction de la pression acoustique à laquelle elle est soumise. Par exemple, la géométrie du premier matériau diélectrique est définie de façon à se déformer sous l'effet d'une variation de pression de façon à faire varier la capacité du microphone électrostatique. On peut, par exemple prévoir une géométrie en arrêtes de poisson telle que la distance entre les extrémités des arrêtes varie sous l'effet d'une variation de la pression de sorte à entraîner une variation de la capacité linéique.

Comme visible en figure 2, outre l'antenne de réception acoustique F, le dispositif de réception d'ondes acoustiques comprend un excitateur EX configuré pour appliquer, lors d'une étape de réception, une tension entre les deux électrodes A et B de la ligne de transmission L, au niveau de la première extrémité longitudinale E1 de la ligne de transmission L, de façon à générer une onde électromagnétique d'entrée se déplaçant vers la deuxième extrémité longitudinale E2 de la ligne de transmission L, et se réfléchissant sur la deuxième extrémité longitudinale E2 (laissée non adaptée) de la ligne de transmission de façon à former une onde électromagnétique de sortie se déplaçant en sens inverse de l'onde électromagnétique d'entrée.

Selon l'invention, l'excitateur EX est configuré pour appliquer simultanément, lors de la phase de réception de l'antenne acoustique, au niveau de la première extrémité de la ligne L1 entre le premier conducteur A et le deuxième conducteur B, une tension comprenant un ensemble de tensions sinusoïdales comprenant une tension sinusoïdale fondamentale et un ensemble d'harmoniques de la tension sinusoïdale fondamentale.

Par ailleurs, selon l'invention, la fréquence de la tension fondamentale est définie de façon que des ondes stationnaires s'établissent dans la ligne de transmission L. La fréquence f de la tension sinusoïdale fondamentale est alors la fréquence de résonance d'ordre 1 de la ligne de transmission. Le microphone électrostatique (ou la ligne) est utilisé en tant que résonateur électromagnétique. De la sorte, l'onde électromagnétique de sortie comprend des voies directionnelles de l'antenne acoustique.

Le microphone électrostatique linéique continu formé par la ligne de transmission L de la figure 2 module globalement en amplitude chaque onde stationnaire générée par une des tensions harmoniques du signal d'excitation. La fonction de transfert de la ligne de transmission L étant linéaire, les harmoniques n'interfèrent pas les unes avec les autres. Le signal acoustique est le signal modulant. Par conséquent, il suffit de séparer ou de sélectionner les différentes porteuses (ondes stationnaires) modulées en amplitude et de les démoduler en amplitude, pour obtenir le signal acoustique ou signal modulant.

Cette modulation de chaque onde stationnaire harmonique par le signal acoustique est en tout point proportionnelle à la tension efficace de l'onde stationnaire générée par l'harmonique considéré.

Un avantage majeur de cette solution réside dans le fait que l'excitation par ondes stationnaires harmoniques engendre une formation naturelle de voies directives dans différentes directions. La solution est donc adaptée à des applications de détection et de localisation d'objets. En outre, le traitement pour obtenir ces différentes voies est particulièrement aisé. De simples séparations ou sélections de fréquences porteuses et démodulation en amplitude permettent d'accéder à ces voies. Ces traitements sont peu coûteux en termes de puissance de calcul. Ils peuvent être effectués par un simple démodulateur radio multicanal comme, par exemple, une radio logiciel ou « Software Defined Radio » (SDR) en terminologie anglo-saxonne ou une radio analogique.

En effet, on applique au niveau de la première extrémité E1, c'est-à-dire en entrée, de la ligne de transmission un signal d'entrée (ou tension d'entrée entre les deux armatures A et B) de la forme suivante :

$$UE\,(t) = \sum_{i=0}^{N} Ui * \cos(i * \omega * t + \varphi_i )$$

où Ui est la tension crête de l'harmonique d'ordre i où N - 2 est le nombre d'harmoniques de la tension fondamentale lorsque Ui est non nulle pour chaque i supérieur ou égal à 1 et ω la pulsation de la tension sinusoïdale fondamentale correspondant à la résonnance de la ligne de transmission de sorte que :

$$\omega = 2 * \pi * \frac{c0}{L0}\,\text{et}\,f = \frac{\omega}{2\pi} = \frac{L0}{c0}$$

où f est la fréquence de la tension fondamentale, appelée fréquence fondamentale dans la suite du texte, c0 est la vitesse de propagation de l'onde électromagnétique dans le câble et L0 est la longueur de la ligne de transmission L.

Dans un mode particulier de réalisation Ui est nulle lorsque i = 0. Dans ce cas, seules des tensions sinusoïdales sont appliquées en entrée de la ligne de transmission L.

En variante, Ui est non nulle lorsque i = 0. Une tension continue (harmonique d'ordre 0) est appliquée en entrée de la ligne de transmission L en plus des tensions sinusoïdales de façon simultanée avec les tensions sinusoïdales.

En générant des ondes stationnaires dans la ligne de transmission L, chaque onde stationnaire d'ordre i issue d'une sinusoïde d'ordre i module linéairement la sensibilité de la ligne de transmission L le long de la ligne de transmission L, avec une période spatiale $L_i$ donnée par :

$$L_i = \lambda_i/2$$

où

$$\lambda_i = c0/f_i$$

$$\omega_i = i*\omega = 2*\pi*f_i = 2*\pi*f*i$$

où $f_i$ est la fréquence de l'onde sinusoïdale i et $\lambda_i$ sa longueur d'onde. $f_1$ est égale à f.

La ligne de transmission devient alors un microphone électrostatique directif privilégiant la réception dans un lobe présentant une symétrie de révolution autour de l'axe I de la ligne de transmission dont l'ouverture dépend de la longueur d'onde de l'harmonique et de la longueur d'onde acoustique.

La direction privilégiée est la direction selon laquelle la projection du signal acoustique sur la ligne de transmission L présente une même longueur d'onde que l'onde stationnaire $\lambda_i$, c'est-à-dire une même période spatiale que l'onde stationnaire d'ordre i. Chaque sinusoïde d'ordre i modulée en amplitude forme ainsi une voie dans une direction privilégiée formant un angle βi avec l'axe I pour une fréquence acoustique particulière, comme un réseau de diffraction.

Ainsi, le fait d'exciter la ligne de transmission L par un signal d'entrée présentant une tension continue en plus des tensions sinusoïdales permet d'obtenir une voie dans une direction formant un angle $\beta_0 = \pi/2$ avec la ligne de transmission lorsqu'elle s'étend linéairement.

Un avantage de l'excitation de la ligne de transmission L par des ondes sinusoïdales qui excitent toute la longueur de la ligne de transmission et non pas la seule longueur d'une impulsion est d'offrir une antenne présentant une sensibilité améliorée dans le ratio entre la longueur du câble et la longueur de l'impulsion.

Un autre avantage de cette excitation par des ondes sinusoïdales est la réduction du bruit de l'écoulement qui est particulièrement importante dans le premier mode de réalisation dans lequel la ligne de transmission a une fonction de microphone électrostatique continu, du fait du principe de mesure non localisée.

Ce type d'excitation permet de limiter les pertes d'énergie en permettant de limiter, à puissance donnée, la tension crête des tensions sinusoïdales injectées en entrée de la ligne de transmission L. Cette solution convient donc parfaitement aux applications de lutte anti sous-marine notamment à des flûtes acoustiques tractées par des véhicules sous-marins, comme des gliders ou des petits véhicules autonomes sous-marins ou AUV (« *Autonomous Underwater Vehicle* ») ou de surface ou USV (« *Unmanned Surface Vehicle*») de faible tonnage et présentant des réserves limitées en énergie. Elle est particulièrement adaptée aux systèmes dans lesquels un grand nombre de flûtes doit être déployé (surveillance des frontières terrestres ou maritimes par barrage fixe, barrages de bouées, meutes de véhicules autonomes sous-marins).

Cette solution est, par ailleurs, peu consommatrice d'énergie, l'injection d'une faible puissance sur la ligne de transmission étant suffisante pour entretenir les ondes stationnaires, seules les pertes ohmiques et diélectriques de la ligne de transmission étant à compenser pour obtenir l'effet microphonique. Elle permet également d'éviter d'avoir à prévoir une charge pour dissiper l'énergie à la deuxième extrémité E2.

Nous allons décrire plus en détail le dispositif acoustique de la figure 2.

Afin d'exciter la ligne de transmission L, l'excitateur EX comprend un générateur G configuré pour délivrer les tensions sinusoïdales et l'éventuelle tension continue.

Le générateur G comprend un générateur de tension continue GC configuré pour délivrer la tension continue.

Le générateur G comprend également un modulateur MO configuré pour délivrer des tensions sinusoïdales et l'éventuelle tension continue à partir de la tension continue.

Le générateur comprend, avantageusement, un amplificateur de puissance AMP configuré pour amplifier, par exemple individuellement, les tensions sinusoïdales et l'éventuelle tension continue.

Afin de générer des ondes stationnaires, l'excitateur EX comprend avantageusement une boucle de régulation BCL configurée pour régler la fréquence fondamentale de consigne fc et donc la fréquence fondamentale f en fonction d'un rapport d'ondes stationnaires ROS ou d'un taux d'ondes stationnaire TOS de façon que l'onde générée au sein de la ligne de transmission L soit stationnaire.

A cet effet, l'excitateur EX comprend, par exemple, un capteur CA, par exemple un voltmètre destiné à délivrer une mesure de tension permettant à un calculateur CAL de l'excitateur EX, de déterminer un taux d'ondes stationnaires ou un rapport d'ondes stationnaires, ou un tos-mètre destiné à mesurer un taux d'ondes stationnaires TOS au sein de la ligne de transmission L. Le calculateur CAL est avantageusement configuré pour ajuster la fréquence fondamentale de consigne fc à partir de mesures délivrées par le capteur CA de sorte qu'une onde stationnaire soit générée au sein de la ligne de transmission L.

Avantageusement, le calculateur CAL est configuré pour ajuster la fréquence fondamentale de consigne fc à partir de mesures délivrées par le capteur CA de sorte que le TOS mesuré soit maximal.

Le calculateur CAL délivre la fréquence fondamentale de consigne fc. Le générateur G est relié au calculateur CAL de sorte à recevoir la fréquence fondamentale de consigne fc et à délivrer la tension fondamentale à une fréquence fondamentale f égale à la tension fondamentale de consigne fc et les harmoniques de la tension fondamentale.

Plus particulièrement, le modulateur reçoit la fréquence fondamentale de consigne fc.

Avantageusement, la deuxième extrémité E2 de la ligne de transmission L est libre. Autrement dit, l'antenne acoustique F est dépourvue de charge reliée à la deuxième extrémité E2 de la ligne de transmission L. Cela permet la génération d'ondes stationnaires sans traitement autre que le réglage de la fréquence fondamentale, avec un minimum de perte et un maximum de longueur utile par rapport à une extrémité en court-circuit (dont la sensibilité serait nulle sur tous les harmoniques).

Avantageusement, l'excitateur EX comprend un duplexeur DU connecté électriquement à la ligne de transmission L au travers duquel le générateur G est destiné à appliquer la tension d'entrée.

Le duplexeur DU a pour fonction de séparer l'onde électromagnétique d'entrée (injection) de l'onde électromagnétique de sortie (retour). Il comprend une sortie SDU sur laquelle est destinée à être transmise l'onde électromagnétique de sortie à un récepteur R relié à la sortie SDU.

Le dispositif de réception d'ondes acoustiques comprend un récepteur R recevant l'onde électromagnétique de sortie. L'onde électromagnétique de sortie comprend une éventuelle tension continue (lorsqu'une tension continue est appliquée en entrée) et les tensions sinusoïdales d'entrée modulées en amplitude correspondant à des voies d'antenne formées selon des directions différentes.

Le récepteur R est un récepteur radio multicanal apte à séparer les différentes porteuses modulées en amplitude ce qui permet de séparer les différentes voies directives d'antenne correspondant chacune à une harmonique sinusoïdale modulée en amplitude par le signal acoustique lorsque des ondes stationnaires sont établies dans la ligne de transmission. La séparation des différentes porteuses est, par exemple, réalisée par transformée de Fourier.

Le dispositif de réception d'ondes acoustiques comprend avantageusement, des démodulateurs d'amplitude DMi (i= 0 à N) permettant, chacun, de démoduler en amplitude une des voies directives de l'antenne de sorte à obtenir le signal acoustique mesuré selon chacune des voies d'antenne. La démodulation en amplitude est, par exemple, réalisée en bande latérale unique ou SSB (acronyme de l'expression anglo-saxonne «single-sideband modulation ») ou de façon plus classique, par exemple, par une démodulation d'amplitude AM classique.

Avantageusement ce récepteur R est un radio logicielle ou SDR (en référence à l'expression anglo-saxonne « Software Define Receiver »). Les démodulateurs DMi sont alors compris dans le récepteur. En variante, le dispositif comprend un récepteur radio permettant de séparer les différentes voies directionnelles et des démodulateurs pour démoduler les voies directionnelles en amplitude.

Dans le premier mode de réalisation, représenté en figure 2, l'antenne acoustique est la ligne de transmission L. Par ailleurs, la ligne de transmission présente une fonction de microphone électrostatique sur toute la longueur de la ligne de transmission.

Ce mode de réalisation est dépourvu d'hydrophone ce qui permet de réaliser des antennes acoustiques très simples, homogènes et de diamètre constant ce qui facilite leur intégration et leur miniaturisation. La longueur et le diamètre de l'antenne peuvent être choisis de façon arbitraire, ils ne sont pas contraints par la présence d'hydrophone, ce qui permet, notamment, de limiter la traînée de l'antenne et la consommation d'énergie. Le fait de pouvoir concevoir une antenne présentant un diamètre constant sur toute sa longueur facilite son enroulement sur un treuil ainsi que la conception d'un treuil et d'un trancanage le cas échéant. Cela limite également les risques de coincement de l'antenne acoustique dans espace réduit à cause d'un renflement dû aux hydrophones.

En variante, l'antenne peut comprendre un diamètre variant le long de la ligne.

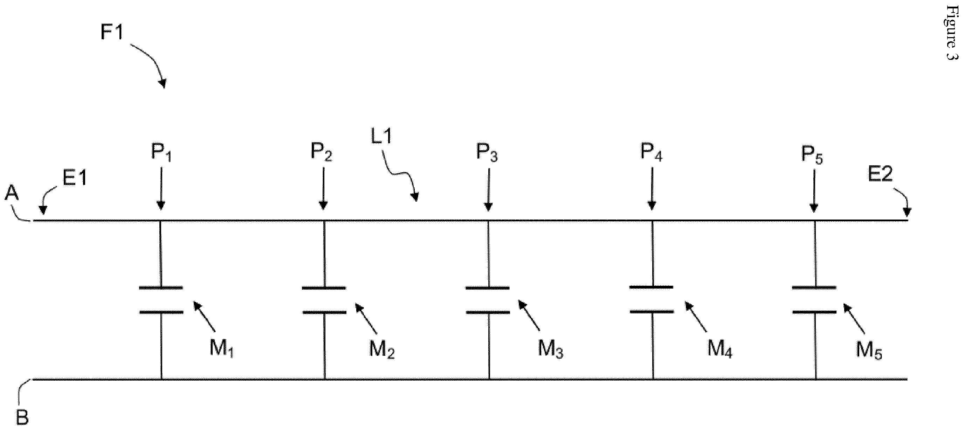

En figure 3, on a représenté un schéma électrique d'une antenne acoustique F1 selon un deuxième mode de réalisation de l'invention.

Ce mode de réalisation de l'antenne de la figure 2 en ce que l'antenne acoustique est configurée de façon à être apte à présenter une fonction de microphone électrostatique sensiblement uniquement en des portions longitudinales $P_j$ élémentaires de la ligne L1 distantes les unes des autres le long de la ligne L1.

L'invention se rapporte également à un dispositif de réception acoustique qui diffère de celui de la figure 2 par l'antenne acoustique qui est telle que représentée en figure 3.

Dans le mode de réalisation de la figure 3, l'antenne acoustique comprend la ligne L1 et des microphones électrostatiques élémentaires $M_j$, avec j= 1 à J (J = 5 dans l'exemple non limitatif de la figure 3), disposés au niveau de portions longitudinales $P_j$ de la ligne L1 distantes les unes des autres le long de la ligne de transmission L1, et reliés à la ligne L1 au niveau des portions longitudinales respectives.

Les microphones électrostatiques $M_j$ sont reliés en parallèle.

Dans l'exemple particulier de la figure 3, la ligne L1 est une ligne de transmission comprenant le premier conducteur A et le deuxième conducteur B, le premier conducteur A et le deuxième conducteur B étant séparés par un deuxième matériau diélectrique.

Avantageusement, la ligne de transmission L1 est insensible à une variation de la pression acoustique ou la sensibilité de la ligne de transmission à une variation de la pression acoustique est négligeable par rapport à celle des microphones électrostatiques élémentaires. Par exemple, le deuxième matériau diélectrique est insensible à des variations de pression acoustique. Le deuxième matériau diélectrique est, par exemple, incompressible ou présente une permittivité locale indépendante des variations de la pression locale.

La ligne de transmission L1 peut être un coaxial. D'autres réalisations de ligne de transmission L1 sont bien entendu envisageables. La ligne de transmission peut, par exemple, être réalisée sous forme d'une paire torsadée incluse dans le deuxième matériau diélectrique, d'une ligne bifilaire incluse dans le deuxième matériau diélectrique ou d'un câble plat comportant deux rubans conducteurs séparés par le deuxième matériau diélectrique.

Chaque microphone électrostatique élémentaire $M_j$ comprend une première armature s'étendant au niveau de la portion longitudinale $P_j$ considérée et reliée au premier conducteur A de la ligne de transmission L1 au niveau de la section considérée et une deuxième armature s'étendant au niveau de la portion longitudinale considérée $P_j$ reliée au deuxième conducteur B de la ligne de transmission L1 au niveau de la portion longitudinale considérée $P_j$.

De la sorte, l'ensemble des microphones électrostatique élémentaires $M_j$ module globalement en amplitude chaque onde stationnaire générée par une des tensions harmoniques du signal d'excitation.

La modulation de chaque onde stationnaire harmonique par le signal acoustique est la somme des modulations locales de l'onde stationnaire considérée par chacun des microphones électrostatiques élémentaires.

Le deuxième mode de réalisation présente sensiblement les mêmes avantages que celui de la figure 2.

Par ailleurs, il permet d'obtenir une flûte ou antenne acoustique présentant une meilleure sensibilité que le mode de réalisation de la figure 2 dans la mesure où il est plus aisé de réaliser des microphones électrostatiques élémentaires c'est-à-dire sensiblement ponctuels présentant une bonne sensibilité qu'une ligne de transmission présentant une bonne sensibilité.

Toutefois, ce mode de réalisation nécessite plus de matériel et est moins simple à assembler que le premier mode de réalisation. Par ailleurs, il est moins avantageux du point de vue du diamètre de l'antenne acoustique.

Avantageusement, dans le deuxième mode de réalisation, les microphones électrostatiques élémentaires $M_j$ sont répartis, le long de la ligne de transmission L1, de façon logarithmique ou de façon aléatoire afin de permettre un échantillonnage parcimonieux de l'onde électromagnétique de sortie et donc une acquisition comprimée. Ce type de répartition permet de reconstruire les différentes sinusoïdes modulées en amplitude à partir des signaux mesurés en sortie du duplexeur avec un nombre limité de microphones électrostatiques.

En variante, le microphone électrostatique comprend un nombre de microphones électrostatiques élémentaires supérieur ou égal au double de la fréquence f de résonance fondamentale de la ligne L1 et les microphones électrostatiques élémentaires sont répartis le long de la ligne de transmission afin de permettre de reconstruire les différentes sinusoïdes modulées en amplitude à partir des signaux mesurés en sortie du duplexeur avec un nombre limité de microphones électrostatiques. Cette solution présente l'avantage de ne pas nécessiter de faire des hypothèses sur les signaux acoustiques à mesurer (spectre) pour réaliser l'échantillonnage des signaux mesurés en sortie du duplexeur.

Ce mode de réalisation peut bien entendu être mis en oeuvre avec une ligne de transmission L1 ou avec une ligne configurée pour avoir une fonction de transmission lorsque son deuxième matériau diélectrique est mis en contact physique direct avec un autre conducteur comme le premier mode de réalisation.

Le dispositif de réception d'ondes acoustiques selon l'invention comprend avantageusement un dispositif de traitement configuré pour détecter et/ou localiser des cibles sous-marines à partir de l'onde de sortie démodulée en fréquence et en amplitude.

Ce traitement est, par exemple, réalisé par le calculateur CAL ou un autre calculateur.

La solution proposée présente l'avantage de permettre de centraliser l'acquisition de données de toute l'antenne acoustique dans un seul composant, le récepteur, ce qui élimine tous les problèmes de phase différentielle et de calibration relative des niveaux tout en simplifiant le traitement par l'utilisateur et le coût associé.

L'invention se rapporte également à un procédé de détection d'ondes acoustiques à partir d'un dispositif de réception selon l'invention. Ce procédé comprend une étape de réception lors de laquelle l'excitateur applique, au niveau de la première extrémité longitudinale E1 de la ligne, une tension d'entrée qui comprend simultanément un ensemble de tensions sinusoïdales comprenant une tension sinusoïdale fondamentale et un ensemble d'harmoniques de la tension sinusoïdale fondamentale.

L'invention se rapporte également à un procédé de formation de voies directionnelles acoustiques comprenant le procédé de détection d'ondes acoustiques selon l'invention et les étapes suivantes : séparer l'onde électromagnétique de sortie de l'onde électromagnétique d'entrée, démoduler l'onde électromagnétique de sortie en fréquence de façon à séparer différentes voies d'antenne et démoduler les voies d'antenne en amplitude.

## Revendications

1. Dispositif de réception d'ondes acoustiques comprenant:

    - une antenne acoustique apte à présenter une fonction de microphone électrostatique distribué le long d'une ligne (L) de l'antenne acoustique comprenant un conducteur (A) et un matériau diélectrique (D), la ligne (L) étant une ligne de transmission ou étant configurée pour présenter une fonction de ligne de transmission lorsque le matériau diélectrique est en contact physique direct avec un autre conducteur,
    - un excitateur (EX) configuré pour appliquer, lors d'une étape de réception, un signal d'entrée au niveau d'une première extrémité longitudinale (E1) de la ligne (L) de façon à générer une onde électromagnétique d'entrée se déplaçant vers une deuxième extrémité longitudinale (E2) de la ligne (L) et de sorte à générer une onde électromagnétique de sortie se déplaçant en sens inverse de l'onde électromagnétique d'entrée,

    ledit dispositif étant **caractérisé en ce que** :

    - ledit signal d'entrée est une tension d'entrée ;
    - la tension d'entrée comprend simultanément un ensemble de tensions sinusoïdales comprenant une tension sinusoïdale fondamentale et un ensemble d'harmoniques de la tension sinusoïdale fondamentale, la fréquence de la tension sinusoïdale fondamentale étant définie de façon que des ondes stationnaires s'établissent dans la ligne (L) de sorte que l'onde électromagnétique de sortie comprend des voies directionnelles de l'antenne acoustique.

2. Dispositif de réception d'ondes acoustiques selon la revendication précédente, comprenant un récepteur (R) permettant de séparer les voies directionnelles de l'antenne acoustique et un ensemble de démodulateurs (DMi) permettant de démoduler les voies directionnelles de l'antenne en amplitude.

3. Dispositif de réception d'ondes acoustiques selon l'une quelconque des revendications précédentes, dans lequel la ligne (L) est une ligne de transmission.

4. Dispositif de réception d'ondes acoustiques selon l'une quelconque des revendications précédentes, dans lequel l'antenne acoustique est la ligne (L), la ligne (L) étant apte à présenter une fonction de microphone électrostatique sur toute sa longueur.

5. Dispositif de réception selon l'une quelconque des revendications précédentes, dans laquelle l'antenne acoustique comprend la ligne et des microphones électrostatiques élémentaires espacés le long de la ligne et reliés électriquement à la ligne de sorte que l'antenne soit apte à présenter une fonction de microphone électrostatique en des portions longitudinales espacées les unes des autres le long de la ligne.

6. Dispositif de réception d'ondes acoustiques selon l'une quelconque des revendications précédentes, comprenant un duplexeur (DU) configuré pour séparer l'onde électromagnétique de sortie de l'onde électromagnétique d'entrée.

7. Procédé de détection d'ondes acoustiques à partir d'un dispositif de réception d'ondes acoustiques selon l'une quelconque des revendications précédentes, le procédé de détection comprenant une phase de réception lors de laquelle l'excitateur (EX) applique, au niveau de la première extrémité longitudinale (E1) de la ligne de transmission (L), la tension d'entrée.

8. Procédé de formation de voies directionnelles acoustiques comprenant le procédé selon la revendication 7, le procédé comprenant en outre, les étapes suivantes : séparer l'onde électromagnétique de sortie de l'onde électromagnétique d'entrée, séparer les voies directionnelles de l'antenne acoustique et démoduler les voies directionnelles en amplitude.

**Patentansprüche**

1. Vorrichtung zum Empfangen von akustischen Wellen, Folgendes umfassend:

   - eine akustische Antenne, die dazu fähig ist, eine Kondensatormikrofonfunktion aufzuweisen, die entlang einer Leitung (L) der akustischen Antenne verteilt ist, die einen Leiter (A) und ein dielektrisches Material (D) umfasst, wobei die Leitung (L) eine Übertragungsleitung ist oder dazu konfiguriert ist, eine Übertragungsleitungsfunktion aufzuweisen, wenn das dielektrische Material in direktem physikalischem Kontakt mit einem anderen Leiter ist,
   - einen Erreger (EX), der dazu konfiguriert ist, während eines Empfangsschritts ein Eingangssignal an einem ersten Längsende (E1) der Leitung (L) so anzuwenden, dass eine elektromagnetische Eingangswelle erzeugt wird, die sich zu einem zweiten Längsende (E2) der Leitung (L) hin bewegt, und dass eine elektromagnetische Ausgangswelle erzeugt wird, die sich in die entgegengesetzte Richtung zu der elektromagnetischen Eingangswelle bewegt,

wobei die Vorrichtung **dadurch gekennzeichnet ist, dass**:

   - das Eingangssignal eine Eingangsspannung ist;
   - die Eingangsspannung gleichzeitig einen Satz von Sinusspannungen, der eine fundamentale Sinusspannung umfasst, und einen Satz von Oberwellen der fundamentalen Sinusspannung umfasst, wobei die Frequenz der fundamentalen Sinusspannung so definiert ist, dass sich stehende Wellen in der Leitung (L) ansiedeln, dass die elektromagnetische Ausgangswelle Richtungswege der akustischen Antenne umfasst.

2. Vorrichtung zum Empfangen von akustischen Wellen nach dem vorhergehenden Anspruch, umfassend einen Empfänger (R) zum Trennen der Richtungswege der akustischen Antenne und einen Satz von Demodulatoren (DMi) zum Demodulieren der Richtungswege der Antenne in Bezug auf die Amplitude.

3. Vorrichtung zum Empfangen von akustischen Wellen nach einem der vorhergehenden Ansprüche, wobei die Leitung (L) eine Übertragungsleitung ist.

4. Vorrichtung zum Empfangen von akustischen Wellen nach einem der vorhergehenden Ansprüche, wobei die akustische Antenne die Leitung (L) ist, wobei die Leitung (L) dazu fähig ist, eine Kondensatormikrofonfunktion über ihre gesamte Länge aufzuweisen.

5. Empfangsvorrichtung nach einem der vorhergehenden Ansprüche, wobei die akustische Antenne die Leitung und elementare Kondensatormikrofone umfasst, die entlang der Leitung beabstandet sind und elektrisch mit der Leitung derart verbunden sind, dass die Antenne dazu fähig ist, eine Kondensatormikrofonfunktion in Längsabschnitten aufzuweisen, die entlang der Leitung voneinander beabstandet sind.

6. Vorrichtung zum Empfangen von akustischen Wellen nach einem der vorhergehenden Ansprüche, umfassend einen Duplexer (DU), der dazu konfiguriert ist, die elektromagnetische Ausgangswelle von der elektromagnetischen Eingangswelle zu trennen.

7. Verfahren zum Erkennen von akustischen Wellen von einer Vorrichtung zum Empfangen von akustischen Wellen nach einem der vorhergehenden Ansprüche, wobei das Erkennungsverfahren eine Empfangsphase umfasst, während der der Erreger (EX) die Eingangsspannung an dem ersten Längsende (E1) der Übertragungsleitung (L) anwendet.

8. Verfahren zum Bilden von akustischen Richtungswegen, umfassend das Verfahren nach Anspruch 7, wobei das Verfahren ferner die folgenden Schritte umfasst: Trennen der elektromagnetischen Ausgangswelle von der elektromagnetischen Eingangswelle, Trennen der Richtungswege der akustischen Antenne und Demodulieren der Richtungswege in Bezug auf die Amplitude.

**Claims**

1. A device for receiving acoustic waves comprising:

   - an acoustic antenna able to have an electrostatic microphone function distributed along a line (L) of the acoustic antenna comprising a conductor (A) and a dielectric material (D), the line (L) being a transmission line or being configured to have a transmission line function when the dielectric material is in direct physical contact with another conductor,
   - an exciter (EX) configured to apply, during a reception step, an input signal at a first longitudinal end (E1) of the line (L) so as to generate an input electromagnetic wave moving towards a second longitudinal end (E2) of the line (L) and so as to generate an output electromagnetic wave moving in the opposite direction to the input electromagnetic wave,

   said device being **characterised in that**:

   - said input signal is an input voltage;
   - the input voltage simultaneously comprises a set of sinusoidal voltages comprising a fundamental sinusoidal voltage and a set of harmonics of the fundamental sinusoidal voltage, with the frequency of the fundamental sinusoidal voltage being defined such that standing waves are established in the line (L) such that the output electromagnetic wave comprises directional paths of the acoustic antenna.

2. The device for receiving acoustic waves according to the preceding claim, comprising a receiver (R) for separating the directional paths of the acoustic antenna and a set of demodulators (DMi) for amplitude demodulating the directional paths of the antenna.

3. The device for receiving acoustic waves according to any one of the preceding claims, wherein the line (L) is a transmission line.

4. The device for receiving acoustic waves according to any one of the preceding claims, wherein the acoustic antenna is the line (L), with the line (L) being able to have an electrostatic microphone function over its entire length.

5. The receiving device according to any one of the preceding claims, wherein the acoustic antenna comprises the line and elementary electrostatic microphones spaced apart along the line and electrically connected to the line such that the antenna is able to have an electrostatic microphone function in longitudinal portions spaced apart from each other along the line.

6. The device for receiving acoustic waves according to any one of the preceding claims, comprising a duplexer (DU) configured to separate the output electromagnetic wave from the input electromagnetic wave.

7. A method for detecting acoustic waves from a device for receiving acoustic waves according to any one of the preceding claims, the detection method comprising a reception phase during which the exciter (EX) applies the input voltage at the first longitudinal end (E1) of the transmission line (L).

8. A method for forming acoustic directional paths comprising the method according to claim 7, the method further comprising the following steps: separating the output electromagnetic wave from the input electromagnetic wave, separating the directional paths of the acoustic antenna and amplitude demodulating the directional paths.

Figure 1

Figure 2

EP 4 241 400 B1

Figure 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3868624 A